# EUROPÄISCHE PATENTANMELDUNG

(11) **EP 0 524 484 A1**
(43) Veröffentlichungstag der Anmeldung: **27.01.1993**
(21) Anmeldenummer: 92111540.8
(22) Anmeldetag: 08.07.1992
(51) Int. Cl.: A23F 3/34, A23F 3/30, A23F 3/16

(54) **Instant-Getränkepulver, - granulat oder -konzentrat aus teeähnlichen Erzeugnissen oder Tee**

(30) Priorität: 12.07.1991 DE 4123124
(71) Anmelder: PLANTEXTRAKT Pflanzen-Extraktions-GmbH & Co Vegetabilien-Kommanditgesellschaft, D-91487 Vestenbergsgreuth (DE)
(72) Erfinder: Kler, Adolf Dr., W-8500 Nürnberg 80 (DE)
(74) Vertreter: Rau, Manfred, Dr. Dipl.-Ing.

(57) **Zusammenfassung**

Die Erfindung betrifft ein Instant-Getränkepulver, -granulat oder -konzentrat aus teeähnlichen Erzeugnissen oder Tee sowie ein Verfahren zu dessen Herstellung. Das Pulver oder Granulat enthält ein Konzentrat aus teeähnlichen Erzeugnissen oder Tee auf einem wasserlöslichen oder in Wasser dispergierbaren pulver-, granulatförmigen oder pastösen Träger. Der Träger ist das Fructosesaccharid Inulin.

## Beschreibung

Die Erfindung betrifft ein Instant-Getränkepulver, -granulat oder -konzentrat aus teeähnlichen Erzeugnissen oder Tee gemaß dem Oberbegriff des Anspruches 1 sowie ein Verfahren zu dessen Herstellung. Derartige Instant-Getränkepulver, -granulate oder -konzentrate enthalten zumindest ein Konzentrat aus teeähnlichen Erzeugnissen oder Tee auf einem wasserlöslichen oder in Wasser dispergierbaren pulver-, granulatförmigen oder pastösen Träger. Ein Träger kommt unter anderem dann zum Einsatz, wenn sich das geschmacksgebende, konzentrierte Ausgangsprodukt technologisch nur schlecht verarbeiten laßt oder wegen seiner hohen Konzentration nur zusammen mit einem Trägerstoff sinnvoll verabreichbar ist. In diesem Fall haben Trägerstoffe die Aufgabe, für eine vernünftige, verbrauchergerechte Dosierung der hochkonzentrierten Extrakte zu sorgen. Dabei wird das Verhältnis von Extrakt zu Trägerstoff so eingestellt, daß der Verbraucher das Instant-Getränkepulver, -granulat oder -konzentrat mit einem Tee- bzw. Meßlöffel leicht dosieren kann.

Als Beispiele für solche Ausgangsprodukte sind Extrakte bzw. Extraktgemische aus teeähnlichen Erzeugnissen, wie Hibikus, Hagebutten, Holunderbeeren, Orangen- und Zitronenschalen, Fenchel, Anis, Süßholz und sonstige Kräuter- bzw. Fruchtextrakte zu nennen, die als geschmacksgebende Rohstoffe zur Herstellung des Instant-Pulvers, -granulats oder -konzentrats dienen können.

Ein besonderes Problem ergibt sich im Zusammenhang mit den gebräuchlichen Trägerstoffen bzw. Trägerstoffgemischen. Es handelt sich dabei um Mono-, Di- und Oligosaccharide, wie z. B. Zucker (Saccharose), Glucose (Dextrose, Traubenzucker), Glucosesirupe oder Maltodextrine. Diese Saccharide haben zwar den Vorteil, im allgemeinen gut löslich zu sein und einen süßlichen bis süßen, angenehmen Geschmack zu besitzen, wie es speziell für den Bereich der Tee- und teeähnlichen Instantprodukte eine wichtige Rolle spielt. Darüber hinaus sind diese Saccharide klar und leicht löslich und zeigen gute technologische Verarbeitungsmöglichkeiten.

Nachteilig bei diesen Stoffen ist die Tatsache, daß sie eine erhebliche kariogene Wirkung zeigen. So wurden bei sogenannten Kindertees, bei denen Zucker als Trägerstoff zum Einsatz kommt, bei ständiger Verabreichung z. B. mittels einer Saugflasche zur Beruhigung in der Nacht erhebliche Schädigungen des Milchgebisses festgestellt.

Ein weiterer Nachteil liegt in dem hohen Kaloriengehalt der Saccharide, die einen Nährwert von etwa 4 kcal/g besitzen. Bei Verabreichung eines Instant-Tees auf Zuckerbasis werden also in hohem Maße sogenannte "leere Kalorien" aufgenommen, was aus ernährungsphysiologischer Sicht sehr nachteilig ist. Nicht zuletzt sind solche Instant-Tees für Diabetiker nicht geeignet.

Zur teilweisen Vermeidung der vorstehenden Nachteile wurde beispielsweise in EP-A-86 106 743.7 bzw. EP-A-86 113 102.7 vorgeschlagen, bei Instant-Getränken der eingangs genannten Art als Träger ein in Wasser lösliches oder dispergierbares Protein aus Weizen, Mais oder Soja zu verwenden. Auch tierische Eiweiße können bekanntermaßen zur Verwendung kommen.

Die als Träger eingesetzten Proteine sind nicht kariogen. Darüber hinaus besitzen sie zwar analog den Sacchariden und Maltodextrinen einen Nährwert von etwa 4 kcal/g, da die Proteine im Fertiggetränk jedoch bedingt durch deren relativ geringe Dosierung nur in einer Konzentration von ca. 1 g pro 100 ml enthalten sind, resultieren deutlich verringerte nachteilige Auswirkungen auf den Verbraucher.

Wesentliche Nachteile schränken die Einsetzbarkeit von Proteinen als Trägerstoffe für Instant-Getränkepulver oder -granulate jedoch ein. Sie weisen einen ausgeprägten Nebengeschmack auf, der nur durch die Verwendung geeigneter Extrakte, Aromen oder ätherischer Öle überdeckt werden kann. Weiterhin sind die Proteine nur beschränkt einsetzbar, da sie beispielsweise für Extrakte bzw. Extraktmischungen mit einem hohen Hibiskusanteil in einer für den Verbraucher akzeptablen Form nicht verarbeitet werden können. Das erhaltene Getränk weist nämlich nicht die vom Verbraucher erwartete rote Farbe, sondern einen bläulichen Farbton auf. Auch die Tatsache, daß im Zusammenhang mit einem Tee- oder teeähnlichen Produkt ein tierisches Eiweiß zur Verwendung kommt, wird vom Verbraucher oftmals als störend empfunden. Im Zuge der aktuellen Entwicklung zu einer gesundheitsbewußten Ernährung werden mehr und mehr rein pflanzliche Produkte gefordert.

Ausgehend von den geschilderten Nachteilen liegt der Erfindung die Aufgabe zugrunde, Instant-Getränkepulver, -granulate oder -konzentrate der eingangs genannten Art in ernährungsphysiologischer, zahngesundheitlicher sowie herstellungs- und anwendungstechnischer Hinsicht zu verbessern.

Die Lösung dieser Aufgabe liegt gemäß dem Kennzeichen des Anspruches 1 darin, daß als Träger das Fructose-Polymer Inulin verwendet ist. Dieses Polymer besteht aus beta 1-2-glycosidisch verknüpften D-Fructosemolekülen, die in verschiednene Lebensmittelpflanzen vorkommen. Solche Pflanzen sind z.B. Zichorie, Schwarzwurzel, Topinambur oder Artischocke.

Inulin ist aufgrund seiner folgenden Eigenschaften besonders geeignet für den Einsatz als Trägerstoff in Instant-Getränkepulvern, -granulaten oder -konzentraten. So schmeckt es neutral bis leicht süßlich und paßt somit optimal zu dem gewünschten geschmacklichen Charakter der Instant-Getränke. Im Gegensatz zu den Produkten auf Saccharidbasis wirkt Inulin nicht kariogen, da es von den in Zahnbelägen vorkommenden Bakterien wie beispielsweise Streptococcus mutans für deren Vermehrung nicht verwendet werden kann. Darüber hinaus kann Inulin als löslicher Ballaststoff betrachtet werden, da es der gültigen Definition für Ballaststoffe als eßbare pflanzliche oder tierische, nicht von den endogenen Enzymen des menschlichen Verdauungstraktes hydrolisierbare Substanzen entspricht. Mit der Aufnahme der erfindungsgemäßen, inulinhaltigen Produkte kann also ein wichtiger Beitrag zur Deckung des täglichen Bedarfes an löslichen Ballaststoffen geleistet werden, was in ernährungsphysiologischer Hinsicht äußerst vorteilhaft ist. Mit der typischen Ballaststoffeigenschaft der Unverdaulichkeit des Inulins geht ein außerordentlich niedriger Kaloriengehalt von weniger als 1 kcal/g einher. Mit Inulin als Trägerstoff können also Instant-Getränke als kalorienarme bzw. kalorienreduzierte sogenannte "Light-Produkte" hergestellt werden. Auch sind solche Getränke für Diabetiker geeignet, da nach der Einnahme keine Erhöhung des Blutglukosespiegels feststellbar ist. Dies ist ein weiterer wichtiger Vorteil gegenüber den Instant-Getränken, bei denen Saccharide als Träger zum Einsatz kommen. Nicht zuletzt ist Inulin in verdauungsphysiologischer Hinsicht vorteilhaft. Als Fructosaccharid kann es die Bifidusflora im menschlichen Dickdarm möglicherweise positiv beeinflussen. Untersuchungen mit kurzkettigen Fructosesacchariden mit einer Kettenlänge von 2 bis 5 Fructoseeinheiten haben gezeigt, daß damit ein Ansäuern des Dickdarminhaltes möglich ist und damit ein physiologisch nachteiliger Zustand der Darmflora vermieden werden kann. Derartige Effekte können mit Trägerstoffen auf Sacharid- oder Eiweißbasis nicht erzielt werden. Auch ruft die Verabreichung von Inulin in ernährungsphyiologisch sinnvollen Quantitäten, also beispielsweise bis 60 g Inulin pro Tag, keinerlei Verdauungsprobleme hinsichtlich Unverträglichkeiten bzw. laxierender Effekte hervor.

Es ist darauf hinzuweisen, daß Inulin als Beimischung zu oder Austauschprodukt in beispielsweise Brot und Gebäck, Süßwaren, Schokolade, Eiskrem, Brotaufstrichen, Milch, Joghurts, Butter, Margarine, Majonaise, Soßen, Desserts und dergleichen bekannt ist. In keinem dieser Anwendungsfälle wird Inulin jedoch als Trägerstoff für das eigentlich geschmackbringende Produktkonzentrat verwendet.

Durch die in den Ansprüchen 2 und 3 angegebenen Maßnahmen kommen die geschilderten Vorteile des Trägerstoffes Inulin bei den erfindungsgemäßen Instant-Getränkepulvern, -granulaten oder -konzentraten besonders zur Geltung. Dabei hat sich gezeigt, daß insbesondere höhermolekulares Inulin mit einer Kettenlänge vom maximal 50 Fructoseeinheiten pro Molekül bei durchschnittlich 25 Fructoseeinheiten pro Molekül und praktisch keinen niedermolekularen Einheiten besonders als Trägerstoff - insbesondere im Zusammenhang mit einer zahnschonenden Wirkung - geeignet ist.

Die Ansprüche 4 bis 7 betreffen jeweils ein Verfahren zur Herstellung eines Instant-Tee oder Früchtetee-Getränkepulvers oder -granulats gemäß den Ansprüchen 1 bis 3. Daraus geht hervor, daß dieses Instant-Produkt besonders einfach durch Lösung eines Extraktes aus teeähnlichen Erzeugnissen oder Tee und des Inulins in Wasser und anschließender Trockung der Mischung zu Pulver und Granulat herstellbar ist. Als Trocknungsverfahren eignet sich besonders die Sprühtrocknung (Anspruch 5).

Die in Anspruch 6 angegebenen Quantitäten der einzelnen Bestandteile zur Herstellung der Lösung stellen verfahrenstechnisch und hinsichtlich der Produkteigenschaften vorteilhafte Wertebereiche dar.

Mit den in den Ansprüchen 7 und 8 angegebenen Wertebereichen für den Trockensubstanzanteil in der zu trocknenden Lösung ist diese in herstellungstechnischer Hinsicht und bezüglich der Lösungseigenschaften des getrockneten Pulvers, Granulats oder Konzentrats vorteilhaft eingestellt.

Das nach Anspruch 10 hergestellte Instant-Getränk aus teeähnlichen Erzeugnissen oder Tee stellt ein ernährungsphysiologisch wertvolles, wohlschmeckendes, verbraucherseits besonders einfach herzustellendes Getränk dar.

Weitere Merkmale und Einzelheiten der Erfindung sind der nachfolgenden Beschreibung entnehmbar, in der Ausführungsbeispiele für erfindungsgemäße Getränkepulver bzw. -granulate bzw. deren Herstellungsverfahren näher erläutert werden.

Mit einem ersten Beispiel wird die Herstellung eines Instant-Fencheltee-Getränkepulvers auf Inulinbasis dargestellt. Dazu werden 20 kg pastöser Fenchelextrakt, 48 kg Inulin mit einer Kettenlänge von durchschnittlich 25 Fructoseeinheiten pro Molekül, 0,7 kg Fenchelöl und 130 kg demineralisiertes Wasser vermischt, wodurch der Extrakt, das aromatische Öl und der Trägerstoff in Losung gehen, bzw. dispergieren. Diese Mischung wird anschließend sprühgetrocknet, wodurch ein Instant-Fencheltee-Pulver in einer Menge von ca. 60 kg erhalten wird. Ein bis zwei Teelöffel dieses Pulvers ergeben in einer Tasse mit Wasser aufgegossen einen typisch nach Fenchel, leicht süßlich schmeckenden Kindertee.

In einem zweiten Beispiel wird ein Instant-Früchtetee-Getränkepulver auf Inulinbasis dargestellt. Als Ausgangsprodukte werden 26 kg pastöser Früchtetee-Extrakt aus Hibiskus, Hagebutten, Holunderbeeren, Orangen- und Zitronenschalen mit 42 kg Inulin, 4 kg monohydrater Zitronensäure, 1,1 kg Fruchtaromen-Mischung und 0,5 kg Tricalciumphosphat vermischt und 136,3 kg Wasser zugegeben. Durch die losung bzw. Dispersion der Ausgangsprodukte in Wasser wird eine Losung bzw. Dispersion in einer Menge von 209,9 kg erhalten. Durch die anschließende Sprühtrocknung dieser Mischung wird ein rotes Instant-Früchteteepulver in einer Menge von ca. 58 kg erhalten. Ein bis zwei Teelöffel dieses Pulvers ergeben in Wasser gelöst ein fruchtiges, aromatisches, typisch nach Früchtetee schmeckendes Produkt.

Alternativ zu der Sprühtrocknung können Instant-Pulver oder -granulate auch durch Granulierung, Kompaktierung, Agglomerierung, Vakuum- sowie Gefriertrocknung hergestellt werden.

## Patentansprüche

1. Instant-Getränkepulver, -granulat oder -konzentrat aus teeähnlichen Erzeugnissen oder Tee enthaltend ein Konzentrat aus teeähnlichen Erzeugnissen oder Tee auf einem wasserlöslichen oder in Wasser dispergierbaren pulver-, granulatförmigen oder pastösen Träger, **dadurch gekennzeichnet**, **daß** der Träger Inulin ist.

2. Instant-Getränkepulver, granulat oder -konzentrat nach Anspruch 1, **dadurch gekennzeichnet**, **daß** Inulin mit einem Gewichsanteil im Bereich von 70% bis 85% im Pulver oder Granulat enthalten ist.

3. Instant-Getränkepulver, -granulat oder -konzentrat nach Anspruch 1 oder 2, **dadurch gekennzeichnet**, **daß** das Inulin eine Kettenlänge von maximal 50 Fructoseeinheiten pro Molekül bei durchschnittlich 25 Fructoseeinheiten pro Molekül aufweist.

4. Verfahren zur Herstellung eines Instant-Getränkepulvers, -granulats oder -konzentrats nach einem der Ansprüche 1 bis 3 , **dadurch gekennzeichnet**, **daß** Extrakt aus teeähnlichen Erzeugnissen oder Tee und Inulin in Wasser gelöst bzw. dispergiert werden und die Mischung anschließend zu Pulver, Granulat oder Konzentrat getrocknet wird.

5. Verfahren nach Anspruch 4, **dadurch gekennzeichnet, daß** die Mischung sprühgetrocknet wird.

6. Verfahren nach Anspruch 4 oder 5, **dadurch gekennzeichnet**, **daß** zur Trocknung eine Lösung aus pastösem Extrakt aus teeähnlichen Erzeugnissen oder Tee mit einem Gewichtsanteil von 3% bis 23% am Gesamtlösungsgewicht, Inulin mit einem Gewichtsanteil von 6% bis 40% am Gesamtlösungsgewicht und Wasser mit einem Gewichtsanbteil von 40% bis 90% am Gesamtlösungsgewicht bereitet wird.

7. Verfahren nach Anspruch 6, **dadurch gekennzeichnet**, **daß** die Lösung zur Herstellung eines kalt- und warmlöslichen Getränkepulvers, -granulats oder -konzentrats einen Trockensubstanzanteil von 30% bis 40% aufweist.

8. Verfahren nach Anspruch 6, **dadurch gekennzeichnet**, **daß** die Lösung zur Herstellung eines warmlöslichen Getränkepulvers, -granulats oder -konzentrats einen Trockensubstanzanteil von mehr als 40% aufweist.

9. Verfahren nach einem der Ansprüche 6 bis 8, **dadurch gekennzeichnet**, **daß** zur Herstellung der Lösung ätherische Öle und/oder Fruchtsäuren und/oder Fruchtaromen in geringen Gewichtsanteilen zugegeben werden.

10. Instant-Getränk aus teeähnlichen Erzeugnissen oder Tee, hergestellt durch Wasserzugabe zu dem Instant-Getränkepulver oder -granulat gemäß einem der Ansprüche 1 bis 3.
